# EUROPEAN PATENT APPLICATION

(11) **EP 1 465 415 A1**
(43) Date of publication of application: **06.10.2004**
(21) Application number: 03029091.0
(22) Date of filing: 17.12.2003
(51) Int. Cl.: H04N 5/33, H04N 7/18

(54) **Close region image extraction device and close region image extraction method**

(30) Priority: 01.04.2003 JP 2003098098
(71) Applicant: Nara Institute of Science and Technology, Ikoma-shi, Nara 630-0101 (JP)
(72) Inventor: Kono, Yasuyuki, Nishinomiya-shi Hyogo (JP); Kidode, Masatsugu, Nara-shi Nara (JP); Ueoka, Takahiro, Ikoma-shi Nara (JP); Kawamura, Tatsuyuki, Ikoma-shi Nara (JP)
(74) Representative: Müller-Boré & Partner Patentanwälte

(57) **Abstract**

The nearby region image extraction device according to the present invention ensures robustness during outdoor usage and acquires nearby region images at the field rate. This device comprises a color camera for taking color moving images; an infrared light source for irradiating a nearby object OB with infrared light; an infrared camera for alternately acquiring a lit infrared image and an unlit infrared image; an absolute value differential image acquiring section for acquiring an absolute value differential image for the lit infrared image and unlit infrared image; a nearby region image extraction section for extracting a nearby region image from the absolute value differential image; and an object image extraction section for extracting an object image that represents the nearby object from the nearby region image.

## Description

### BACKGROUND OF THE INVENTION

### 1. Field of the Invention

The present invention relates to a technique for extracting a close region image that comprises a nearby object from color moving images that comprise the nearby object.

### 2. Description of the Related Art

In recent years, several techniques have been proposed that involve using a color video camera and an infrared camera to extract a close region image that comprises a nearby object located in the vicinity of a cameraman (or a photographer) from color moving images taken by the color video camera.

Ueoka, Kawamura, Kono, Kidode, "Basic experiment for Object Registration/retrieval system employing a Wearable device" , 91^{st} Study Meeting of the Advanced Image Seminar, pages 25 to 30 January, 2002 discloses a device that comprises a color video camera for taking color moving images, an infrared camera which is provided so as to match the optical axis of the color video camera, and an infrared light source that emits infrared light, and that extracts a close region image from color moving images on the basis of an infrared image obtained by receiving infrared light reflected by a target object. Because, in this device, the color video camera and the infrared camera are provided such that the optical axes thereof match, both cameras are capable of photographing the same target object, meaning that it is possible to more accurately extract the close region image from the color moving images. Further, because the infrared image has a characteristic according to which the luminance is inversely proportional to the distance squared, the close region image and the background image can be separated on the basis of the luminance.

However, although the device disclosed by Ueoka, Kawamura, Kono, Kidode, "Basic experiment for Object Registration/retrieval system employing a Wearable device", 91^{st} Study Meeting of the Advanced Image Seminar, pages 25 to 30 January, 2002 permits favorable extraction of the close region image indoors, when used outdoors, the luminance of the background image in the infrared image is higher due to the influence of the large quantity of infrared light contained in sunlight. There has hence been the problem that accurate extraction of the close region image is not possible and outdoor robustness is reduced.

A device has therefore been disclosed which repeatedly turns an infrared light source alternately ON and OFF in sync with the timing with which the infrared camera acquires an infrared image, such that an infrared image when the infrared light source is ON (a lit infrared image) and an infrared image when the infrared light source is OFF (an unlit infrared image) are alternately acquired, a differential image is acquired by subtracting the unlit infrared image acquired in the field following that of the lit infrared image, from the lit infrared image, and this differential image is then used to extract the close region image, whereby outdoor robustness is ensured.

Here, a component of infrared light contained in sunlight (sunlight infrared component) and a component of infrared light from the infrared light source (light source infrared component) are contained in the lit infrared image. On the other hand, only the sunlight infrared component is contained in the unlit infrared image. Hence, when the unlit infrared image is subtracted from the lit infrared image, the sunlight infrared component contained in both images is canceled out and hence only the light source infrared component is contained in the differential image, whereby the background image and the close region image can be accurately separated. Other publications include Tanemoto, Matsumoto, Imai, Ogasawara, "Contactless interface architecture based on image acquisition using an infrared light source", Collected papers from Robotics and Mechatronics Lecture Meeting 2001, 1P1-M10, 2001, and Mihara, Harashima, Numazaki Pop.eye "Pop-up video acquisition system for personal use", WISS2002 Collected papers, pages 73 to 79, December 2002.

However, although, according to the device disclosed by Lee, C., Schroder, K, and Seibel, E. Efficient image segmentation of walking hazards using IR illumination in Wearable low vision aids. Proc. 6^{th} IEEE International Symposium on Wearable Computers(ISWC2002), pages 127 to 128, Oct. 2002, a differential image is acquired by subtracting, from a lit infrared image, an unlit infrared image which is acquired after the lit infrared image is acquired, because, supposing that the cycle in which an odd number field image and an even number field image are acquired is ΔT (i.e. , 1/60 sec.), the differential image thus acquired is acquired in a cycle 2 ΔT (i.e. , 1/30 sec) , there is the problem that the close region image cannot be acquired at the field rate. More particularly, in a case where the infrared camera and the color camera are used by being mounted on the head so as to be wearable, because image variation caused by head movement (the neck turning) is large, the cycle for differential image acquisition is large and there is a difference in the nearby object position between the infrared image and the color image. It is therefore not possible to detect the close region image highly accurately.

### SUMMARY OF THE INVENTION

The present invention was conceived with a view to resolving the above problems and has, as an object, the provision of a close region image extraction device and a close region image extraction method that allow a close region image to be acquired at the field rate while ensuring robustness outdoors.

This close region image extraction device is a close region image extraction device for extracting a close region image that comprises a nearby object located in the vicinity of a cameraman from color moving images, comprising: capture means for acquiring color moving images of the nearby object by using visible light; an infrared light source for irradiating the nearby object with infrared light; lighting control means that repeatedly turn the infrared light source alternately ON and OFF, in sync with the timing with which the capture means acquire field images; infrared image acquiring means that alternately acquire a lit infrared image which is an infrared image of the nearby object when the infrared light source is lit, and an unlit infrared image which is an infrared image of the nearby object when the infrared light source is unlit, in sync with the timing with which the capture means acquire field images; absolute value differential image acquiring means, which acquires an absolute value image for the difference between the lit infrared image and the unlit infrared image acquired in chronological succession, and wherein said absolute image is obtained by multiplying the subtracted values of the lit infrared image from that of the unlit infrared image by minus 1 when the infrared image which corresponds to the current field image is a lit infrared image and the infrared image which corresponds to the previous field is an unlit infrared image; and extracting means for extracting the close region image from the color moving images on the basis of the absolute value differential image acquired by the absolute value differential image acquiring means.

According to this constitution, color moving images are taken by the capture means, the infrared light source is repeatedly turned alternately ON and OFF in sync with the timing with which the capture means acquire field images, and lit infrared images and unlit infrared images are alternately taken repeatedly by the infrared image acquiring means. Further, an absolute value image for the difference between chronologically successive lit infrared images and unlit infrared images (an absolute value differential image) is acquired. Here, in a case where the infrared image which corresponds to the previous field image is a lit infrared image and the infrared image which corresponds to the current field image is an unlit infrared image, the absolute value differential image is acquired by subtracting the unlit infrared image from the lit infrared image, and, in a case where the infrared image which corresponds to the previous field image is an unlit infrared image and the infrared image which corresponds to the current field image is a lit infrared image, the absolute value differential image is acquired by multiplying, by minus 1, the differential image produced by subtracting the lit infrared image from the unlit infrared image.

It is thus possible to obtain a differential image for the lit infrared image and the unlit infrared image at the field rate. Further, the close region image is extracted on the basis of this differential image and the corresponding color moving images are then subjected to masking processing with the close region image serving as a mask image, whereby the close region image is extracted from the color moving images.

These and other objects, features and advantages of the present invention will become more apparent upon reading the following detailed description along with the accompanied drawings.

### BRIEF DESCRIPTION OF THE DRAWINGS

Fig. 1 is an external view of the constitution of the close region image extraction device according to the present embodiment;
Fig. 2 is a block diagram showing the overall constitution of this close region image extraction device;
Fig. 3 shows an example of a synthesized image generated by a field multiplexer;
Fig. 4 serves to illustrate processing performed by the close region image extraction device;
Fig. 5 is a chronological representation of odd-numbered field images and even-numbered field images acquired by the color video camera and a chronological representation of lit infrared images and unlit infrared images acquired by the infrared camera;
Fig. 6A shows color moving images acquired by the color camera; Fig. 6B shows an absolute value differential image generated by using a lit infrared image and an unlit infrared image acquired by the infrared camera; Fig. 6C shows a close region image; and Fig. 6D shows an object image;
Fig. 7 shows a modified example of the image acquisition timing of the color video camera and the infrared camera; and
Fig. 8 shows another example of a synthesized image.

### DESCRIPTION OF THE PREFERRED EMBODIMENTS

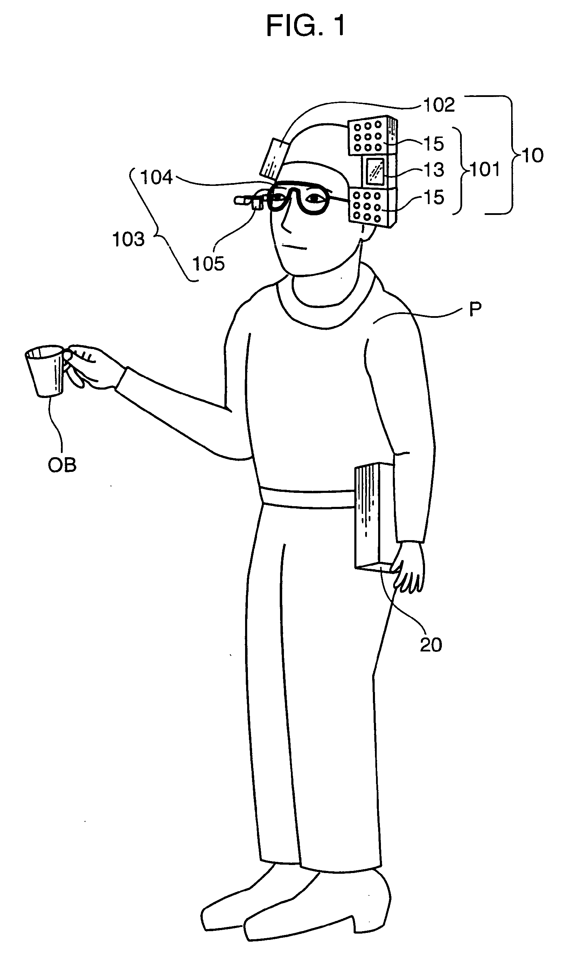

An embodiment of the present invention will be described hereinbelow. Fig. 1 is an external view of the constitution of the close region image extraction device according to the present embodiment. This close region image extraction device is constituted by a mounted portion 10 that is mounted on the regions of the face of a cameraman (a photographer) P, and a wearable computer 20 which is attached at the waist, for example, of the cameraman P. The mounted portion 10 and the wearable computer 20 are electrically connected by an electrical cable, but could be communicably connected wirelessly rather than by an electrical cable.

The mounted portion 10 comprises a photographic unit 101, a control unit 102, and a display unit 103. The photographic unit 101 comprises a beam splitter 13 that receives light reflected by a target object, and infrared light source sections 15 which are arranged above and below the beam splitter 13. The beam splitter 13 is disposed close to the cameraman's temples so as to be capable of receiving light reflected by the target object within the field of view of the cameraman P. This close region image extraction device photographs a nearby object OB grasped by the cameraman P by means of the color video camera, extracts an image of the nearby object OB (object image) from the color moving image thus obtained, and causes the display unit 103 to display this object image as a moving image.

The infrared light source sections 15 are constituted having infrared light emitting diodes arranged in predetermined columns and rows. The control unit 102 comprises a field multiplexer and a sync circuit (described subsequently).

The display unit 103 comprises eyeglasses 104 and a monocular display 105 which is disposed on the frame of the eyeglasses 104 and in front of either the left or right eye of the cameraman P (the right eye of the cameraman P in Fig. 1).

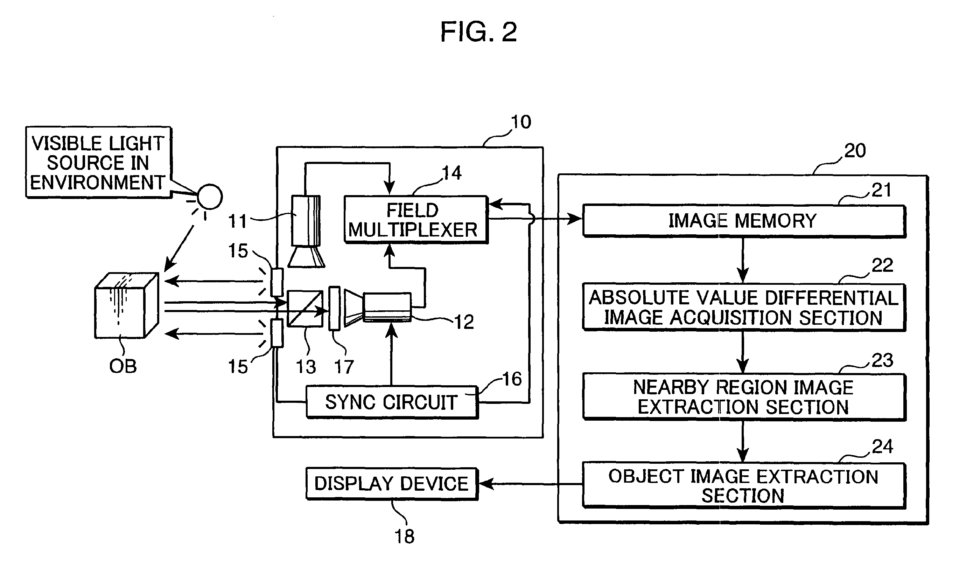

Fig. 2 is a block diagram showing the overall constitution of this close region image extraction device. As shown in Fig. 2, the mounted portion 10 comprises a color camera 11 (as an image capture means), an infrared camera 12, the beam splitter 13, a field multiplexer 14, the infrared light source sections 15, a sync circuit 16, an infrared transmitting filter 17 and a display device 18.

The color camera 11 is disposed above the beam splitter 13 in the figure and acquires color moving images at a predetermined field rate. The color camera 11 comprises an area CCD according to which pixels are arranged in predetermined columns and rows so as to match the pixels of the display device 18. The infrared camera 12 is provided on the right-hand side of the beam splitter 13 in the figure and acquires infrared images at the same field rate as the color camera 11. The infrared camera 12 comprises an area CCD with a high sensitivity to the infrared light band and according to which pixels are arranged in predetermined columns and rows so as to match the pixels of the display device 18.

The beam splitter 13 reflects an optical image of the nearby object OB such that this optical image is directed toward the color camera 11, and transmits the light reflected by the nearby object OB such that this light is directed toward the infrared camera 12. As a result, the optical axes of the color camera 11 and the infrared camera 12 coincide with each another and both cameras are able to photograph the same target object. The infrared transmitting filter 17 is disposed between the beam splitter 13 and the infrared camera 12. Thus, only the infrared light component contained in the light reflected by the target object is extracted and directed toward the infrared camera 12. Further, in a case where a beam splitter that possesses the characteristic of transmitting only the infrared light and directing this light toward the infrared camera 12 is adopted as the beam splitter 13, the infrared transmitting filter 17 is no longer required.

The infrared light source sections 15 are constituted by infrared light emitting diodes and a drive circuit for supplying a drive current to the infrared light emitting diodes, and so forth, and illuminate the nearby object OB by repeatedly turning an infrared light alternately ON and OFF under the control of the sync circuit 16.

The sync circuit 16 causes the infrared light source sections 15 to repeatedly turn the infrared light ON and OFF in sync with the timing with which the color camera 11 acquires field images and thus causes the infrared camera 12 to acquire infrared images in sync with the timing with which the color camera 11 acquires field images. As a result, the infrared camera 12 is capable of alternately acquiring a lit infrared image which is an infrared image when the infrared light source sections 15 are ON, and an unlit infrared image which is an infrared image when the infrared light source sections 15 are OFF, in sync with the timing with which the color camera 11 acquires field images. The perpendicular resolving power of each of a lit infrared image and an unlit infrared image is half the perpendicular resolving power of the frame image.

Further, in the description that follows, when the color camera 11 acquires an odd-numbered field image (an image representing only the odd-numbered columns of a single frame image), the infrared camera 12 acquires a lit infrared image. Further, when the color camera 11 acquires an even-numbered field image (an image representing only the even-numbered columns of a single frame image), the infrared camera 12 acquires an unlit infrared image. However, the present invention is not limited to such image acquisition, that is, image acquisition according to which the infrared camera 12 acquires an unlit infrared image when the color camera 11 acquires an odd-numbered field image and the infrared camera 12 acquires an unlit infrared image when the color camera 11 acquires an even-numbered field image is also possible.

The field multiplexer 14 forms a single image (synthesized image) by synthesizing a total of four images which are an odd-numbered field image and a lit infrared image acquired at the same time as the odd-numbered field image, and an even-numbered field image and an unlit infrared image acquired at the same time as the even-numbered field image, and then outputs this single image to the wearable computer 20. The four images can thus be efficiently outputted to the wearable computer 20. The field multiplexer 14 generates this synthesized image every time these four images are acquired, and outputs this image to the wearable computer 20. Therefore, supposing that the cycle in which a field image is acquired is ΔT, the synthesized image is generated in the cycle 2ΔT.

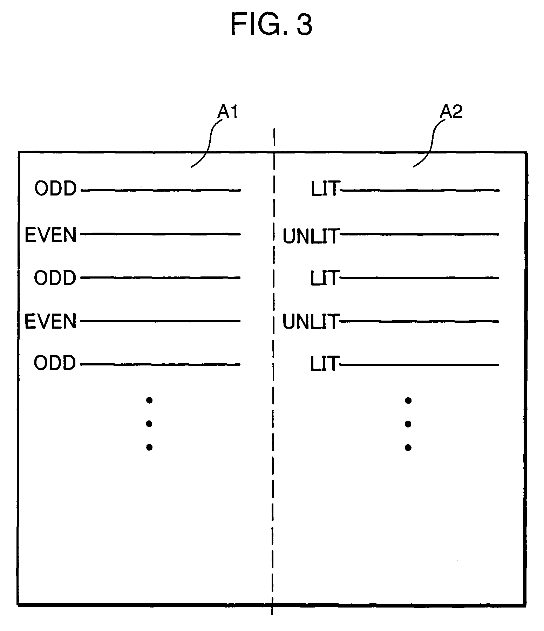

Fig. 3 shows an example of a synthesized image generated by the field multiplexer 14. As shown in Fig. 3, the field multiplexer 14 divides a single image into two areas A1 and A2 which are disposed left and right of the center in a horizontal direction. Further, in area A1, odd-numbered field images and even-numbered field images in which the number of pixels in the horizontal direction has been reduced by half are arranged alternately line by line in sequence starting from an odd-numbered field image. Also, in area A2, lit infrared images and unlit infrared images in which the number of pixels in the horizontal direction has been reduced by half are arranged alternately line by line in sequence starting from a lit infrared image. In this case, an arrangement is also acceptable according to which, in area A1, odd-numbered field images and even-numbered field images are arranged alternately line by line in sequence starting from an even-numbered field image, and, in area A2, lit infrared images and unlit infrared images are arranged alternately line by line in sequence starting from an unlit infrared image. In addition, odd-numbered field images and even-numbered field images may be arranged in area A1, while lit infrared images and unlit infrared images may be arranged in area A2.

The wearable computer 20 shown in Fig. 2 is constituted by a CPU (Central Processing Unit), a ROM (Read Only Memory), a RAM (Random-Access Memory), and an external storage device and the like (all of which are omitted from the figure). An auxiliary storage device stores an operating system and a control program that allows the wearable computer 20 to function as the processing section of the close region image extraction device, and so forth. By executing the control program under the control of the operating system, the CPU allows the wearable computer 20 to function as an image memory 21, an absolute value differential image acquisition section 22, a close region image extraction section 23 and an object image extraction section 24.

The image memory 21 is constituted by a RAM, for example, and temporarily stores the synthesized images generated by the field multiplexer 14.

The absolute value differential image acquisition section 22 reads a single synthesized image from the image memory 21, acquires a differential image obtained by subtracting an unlit infrared image from the lit infrared image contained in the synthesized image as an absolute value differential image, reads out the next synthesized image from the image memory 21, and then multiplies, by -1, a differential image obtained by subtracting the lit infrared image contained in the next synthesized image from the unlit image contained in the synthesized image to acquire an absolute differential image. Differential image as it is used here means an image which is obtained by calculating the luminance differential between pixels corresponding to a lit infrared image and an unlit infrared image.

The close region image extraction section 23 compares the luminance of an absolute value differential image acquired by the absolute value differential image acquisition section 22 with a predetermined threshold value, extracts regions whose luminance exceeds this threshold value as a close region image, subjects a corresponding odd-numbered field image or even-numbered field image to masking processing with the image thus extracted serving as a mask image, and thus extracts a close region image from the odd-numbered field image or even-numbered field image.

The object image extraction section 24 extracts an object image from the close region image extracted by the close region image extraction section 23 by removing the image of the cameraman's hand that grasps the nearby object in the close region image by eliminating skin-colored pixel regions from the close region image.

The display device 18 is constituted by the monocular display 105 and displays object images extracted by the object image extraction section 24.

Further, in this close region image extraction device, the field multiplexer 14 is equivalent to an image synthesizer, the sync circuit 16 is equivalent to lighting control means, and the close region image extraction section 23 and object image extraction section 24 are equivalent to extracting means.

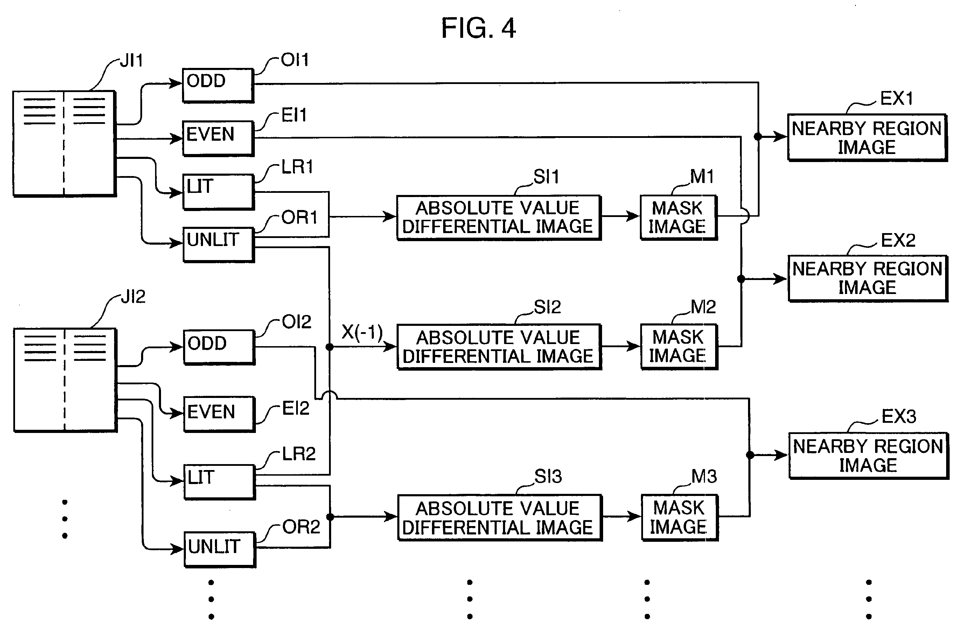

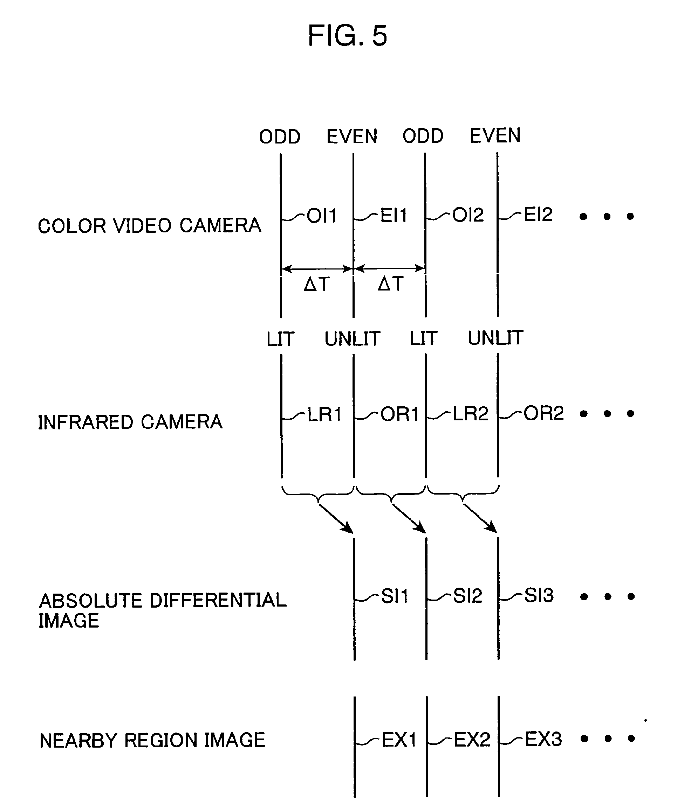

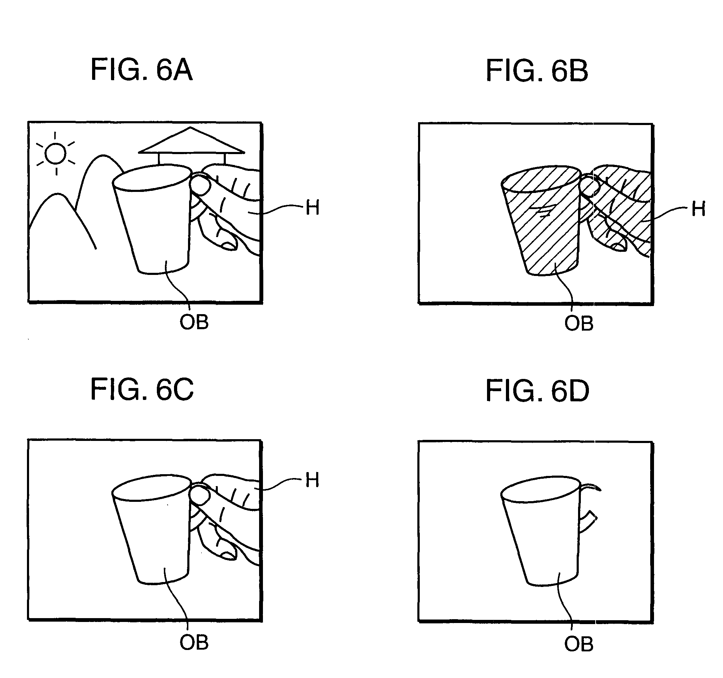

Next, the operation of this close region image extraction device will be described with reference to Figs. 4 to 6. Fig. 4 serves to illustrate the processing performed by this close region image extraction device. Further, Fig. 5 is a chronological representation of odd-numbered field images and even-numbered field images acquired by the color camera 11 and a chronological representation of lit infrared images and unlit infrared images acquired by the infrared camera 12. In addition, Fig. 6A shows color moving images acquired by the color camera 11; Fig. 6B shows an absolute value differential image generated by using a lit infrared image and an unlit infrared image acquired by the infrared camera 12; Fig. 6C shows a close region image; and Fig. 6D shows an object image.

In Fig. 4, synthesized images JI1, JI2,... are shown chronologically in a downward direction in a first column; an odd-numbered field image OI1, an even-numbered field image EI1, a lit infrared image LR1 and an unlit infrared image OR1,... are shown chronologically in a downward direction in a second column; absolute value differential images SI1, SI2,... are shown chronologically in a downward direction in a third column; mask images M1, M2,... are shown chronologically in a downward direction in a fourth column; and close region images EX1, EX2, ... are shown chronologically in a downward direction in a fifth column. Further, in Fig. 5, odd-numbered field images OI1, OI2 , ... and even-numbered field images EI1, EI2, ... are shown alternately in chronological order, and lit infrared images LR1, LR2,...and unlit infrared images OR1, OR2,... are shown chronologically. Also in Fig. 5, the absolute value differential images SI1, SI2,... and close region images EX1, EX2,... are shown chronologically. Further, images which have been assigned the same reference numerals in Figs. 4 and 5 represent the same image.

As shown in Fig. 4, the absolute value differential image acquisition section 22 first subtracts the unlit infrared image OR1 from the lit infrared image LR1 contained in the synthesized image JI1 and thus calculates the absolute value differential image SI1. In this case, the absolute value differential image shown in Fig. 6B is acquired. This absolute value differential image is a monochrome image that contains only luminance information.

Because the absolute value differential image is calculated in this manner, robustness during outdoor usage can be ensured. In an outdoor environment, a large infrared light component is contained in sunlight and therefore the infrared image of the nearby object OB contains an infrared component resulting from sunlight as well as an infrared component caused by illumination infrared light. When the infrared component resulting from sunlight is contained in a large quantity in the infrared image of the nearby object OB, the luminance of the background image excluding the nearby object OB also increases, and, based on this luminance, extraction of only the nearby object OB from the infrared image is difficult. Hence, in order to accurately extract the nearby object OB, it is necessary to remove the infrared component resulting from the sunlight from the infrared image of the nearby object OB so as to extract only the infrared component caused by the illumination infrared light. A lit infrared image comprises an infrared component resulting from sunlight as well as an infrared component caused by illumination infrared light. On the other hand, an unlit infrared image comprises only an infrared component caused by sunlight. Therefore, when the unlit infrared image is extracted from the lit infrared image, the infrared component resulting from the sunlight contained in both infrared images is canceled out, whereby the infrared component caused by illumination infrared light alone can be extracted. Robustness in an outdoor environment is thus ensured.

Next, the close region image extraction section 23 extracts the mask image M1 from the absolute value differential image SI1 by comparing the luminance of the pixels of the absolute value differential image SI1 with a predetermined threshold value. An infrared image possesses the characteristic that the luminance thereof is inversely proportional to the distance squared. In other words, the nearby object OB located near the infrared camera 12 is shown with high luminance in the infrared image, and the background image is shown with luminance that is extremely low in comparison with the nearby object OB. For this reason, the close region image can be extracted from color moving images by setting a predetermined value between the luminance of the nearby object OB and the luminance of the background image as the threshold value and then comparing the luminance of the pixels with this threshold value.

Next, the close region image extraction section 23 uses the mask image M1 to subject the odd-numbered field image OI1 to masking, and thus extracts the close region image EX1 from the odd-numbered field image OI1. In this case, the nearby object OB as shown in Fig. 6C and an image of the hand H of the cameraman P are extracted as the close region image.

Next, the object image extraction section 24 removes the image of the hand H of the cameraman P by eliminating skin-colored pixels from the close region image EX1 and thus extracts the object image. Here, as shown in Fig. 6D, an image of the nearby object OB (cup) alone is extracted, that is, the object image is extracted. The object image thus extracted is displayed by the display device 18.

Then, as shown in Fig. 4, the absolute value differential image acquisition section 22 acquires the absolute value differential image SI2 by subtracting the unlit infrared image contained in the synthesized image JI1 from the lit infrared image LR2 contained in the synthesized image JI2 which is generated after the synthesized image JI1. In other words, as shown in Fig. 5, when the absolute value differential image acquisition section 22 acquires even-numbered differential images (absolute value differential images SI2, SI4, ...), absolute value differential images are obtained by multiplying, by -1, differential images which are produced by subtracting a lit infrared image from an unlit infrared image, and then affording the luminance of the pixels of the differential image a positive value. As a result, the absolute value differential images SI1, SI2,... can be obtained at the field rate.

The display device 18 sequentially displays the object images thus extracted. As a result, the display device 18 displays images of the nearby object OB within the field of view of the cameraman P in compliance with the operation of the cameraman P.

According to the close region image extraction device described hereinabove, because an absolute value differential image is employed when a differential image of a lit infrared image and an unlit infrared image is calculated in order to ensure robustness outdoors, the object image can be obtained at the field rate (ΔT).

Further, the assumption is made that, because the color camera 11 and the infrared camera 12 are contained in the mounted portion 10 which is mounted on regions of the user's face, head movement (neck turning movement) is frequently generated and that, here, the image variation for each image acquired is large. However, because this close region image extraction device is capable of acquiring absolute value differential images at the field rate, the object image can be extracted highly accurately.

Further, because the beam splitter 13 is used to match the optical axes of the color camera 11 and the infrared camera 12, both cameras are capable of acquiring the same target object, whereby the accuracy of extraction of the close region image can be raised still further.

In addition, because the field multiplexer 14 is used to generate a synthesized image which is then outputted to the wearable computer 20, odd-numbered field images, even-numbered field images, lit infrared images and unlit infrared images can be efficiently outputted to the wearable computer 20.

Furthermore, because the photographic unit 102 can be mounted such that the beam splitter 13 is located close to the temples of the cameraman P, cameraman P is able to photograph the nearby object OB by observing the nearby object OB. For this reason, without being conscious of the photographic process, the cameraman P is able to use the nearby object OB to acquire an image of the nearby object OB while performing work of some kind.

In addition, because the wearable computer 20 is used, the cameraman P is able to move about freely with the close region image extraction device thus mounted.

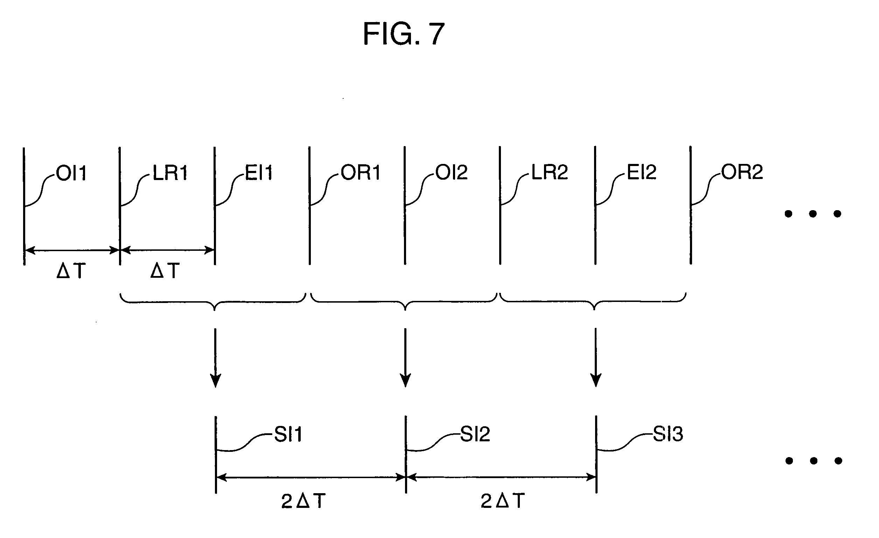

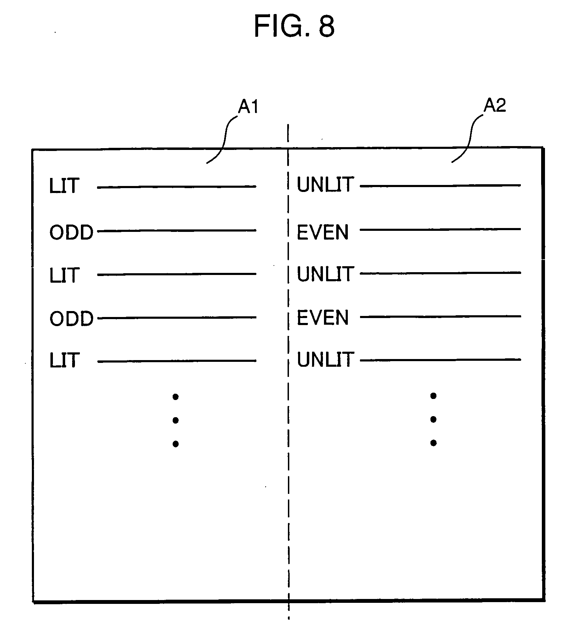

The present invention may adopt the following embodiment.
(1) In the above embodiment, the color camera 11 and infrared camera 12 are not limited to acquiring field images and infrared images with the same timing. For example, the synchronization ("in sync") described in claim 1 also includes an embodiment according to which field images and infrared images are acquired with the timing shifted by a fixed time interval (ΔT) such that the odd-numbered field image OI1, lit infrared image LR1, even-numbered field image EI1, and lit infrared image OR1, ... are acquired in this order as shown in Fig. 7. In this case, when the conventional method is adopted, that is, a method in which only an image produced by subtracting an unlit infrared image from a lit infrared image is the differential image, differential images are acquired in the cycle 4 ΔT. On the other hand, if the method according to the present invention is adopted, because the absolute value differential images SI1, SI2, SI3, ... are acquired in the cycle 2ΔT, the object image can be extracted at high speed even in this modified example.
(2) Although, in the above embodiment, the field multiplexer 14 acquires the synthesized image shown in Fig. 3, other types of synthesized image are equally possible. As shown in Fig. 8, in area A1, lit infrared images and odd-numbered field images in which the number of pixels in the horizontal direction has been reduced by half may be arranged alternately line by line, and, in area A2, unlit infrared images and even-numbered field images in which the number of pixels in the horizontal direction has been reduced by half may be arranged alternately line by line.
(3) Although, in the above embodiment, an interface-mode color camera 11 that acquires images such that same are divided into odd-numbered field images and even-numbered field images are adopted, the present invention is not limited to or by such a camera and may adopt a progressive-mode color camera 11. Here, in the same way as when the interface-mode color camera is adopted, the field multiplexer 14 may generate a synthesized image by employing a total of four images which are two images acquired by the progressive-mode color camera and a lit infrared image and an unlit infrared image which are acquired in sync with these two images. In this case also, synthesized images can be acquired at the frame rate (2ΔT).

According to the present invention as described hereinabove, because absolute value differential images of lit infrared images and unlit infrared images are used to extract the close region image, outdoor robustness can be ensured and close region images can be extracted at the field rate.

Summing up, the present invention was conceived to provide a close region image extraction device which comprises: capture means for acquiring color moving images of the nearby object by using visible light; an infrared light source for irradiating the nearby object with infrared light; lighting control means that repeatedly turn the infrared light source alternately ON and OFF, in sync with the timing with which the capture means acquire field images; infrared image acquiring means that alternately acquire a lit infrared image which is an infrared image of the nearby object when the infrared light source is lit, and an unlit infrared image which is an infrared image of the nearby object when the infrared light source is unlit, in sync with the timing with which the capture means acquire field images; absolute value differential image acquiring means, which acquires an absolute value image for the difference between the lit infrared image and the unlit infrared image acquired in chronological succession, and wherein said absolute image is obtained by multiplying the subtracted values of the lit infrared image from that of the unlit infrared image by minus 1 when the infrared image which corresponds to the current field image is a lit infrared image and the infrared image which corresponds to the previous field is an unlit infrared image; and extracting means for extracting the close region image from the color moving image on the basis of the absolute value differential image acquired by the absolute value differential image acquiring means.

According to this constitution, color moving images are taken by the capture means, the infrared light source is repeatedly turned alternately ON and OFF in sync with the timing with which the capture means acquire field images, and lit infrared images and unlit infrared images are alternately taken repeatedly by the infrared image acquiring means. Further, an absolute value image for the difference between chronologically successive lit infrared images and unlit infrared images (an absolute value differential image) is acquired. Here, in a case where the infrared image which corresponds to the previous field image is a lit infrared image and the infrared image which corresponds to the current field image is an unlit infrared image, the absolute value differential image is acquired by subtracting the unlit infrared image from the lit infrared image, and, in a case where the infrared image which corresponds to the previous field image is an unlit infrared image and the infrared image which corresponds to the current field image is a lit infrared image, the absolute value differential image is acquired by multiplying, by minus 1, the differential image produced by subtracting the lit infrared image from the unlit infrared image.

It is thus possible to obtain a differential image for the lit infrared image and the unlit infrared image at the field rate. Further, the close region image is extracted on the basis of this differential image and the corresponding color moving image is then subjected to masking processing with the close region image serving as a mask image, whereby the close region image is extracted from the color moving image.

Further, the optical axes of the capture means and the infrared image acquiring means are preferably provided so as to coincide with each other. According to this constitution, because the infrared image acquiring means and the capture means are capable of photographing the same target object, the accuracy of extraction of the close region image extracted from the color moving image can be raised still further.

Also, it is preferable that this close region image extraction device further comprise: an image synthesizer, which synthesizes two chronologically successive field images that are acquired by the capture means, and a lit infrared image and an unlit infrared image acquired in sync with these two field images, to form a single image, and outputs this image to the absolute value differential image acquiring means, wherein the image synthesizer synthesizes the two field images, the lit infrared image and the unlit infrared image by reducing same such that the number of pixels thereof in the horizontal direction is halved, so as to form a single image.

According to this constitution, because two successive color images, a lit infrared image and an unlit infrared image are synthesized to form a single image by being reduced such that the number of pixels in the horizontal direction in these images is halved, these four images can be efficiently outputted to the absolute value differential image acquiring means.

Further, the extracting means preferably extract an object image that represents the nearby object by eliminating skin-colored regions from the close region image. According to this constitution, the extracting means are capable of removing the image of the cameraman's hand that grasps the nearby object contained in the close region image and therefore of extracting an object image that represents the nearby object from the color moving image.

In addition, it is preferable that this close region image extraction device further comprise: an head-mounted display for displaying an object image extracted by the extracting means, wherein the capture means, the infrared light source and the infrared image acquiring means are integrated with the head-mounted display and are provided so that the respective optical axes thereof lie within the field of view of the cameraman.

According to this constitution, the capture means and the infrared image acquiring means permit the cameraman to grasp a nearby object and to take an image while observing the nearby object thus grasped.

The close region image extraction method according to the present invention is a close region image extraction method for extracting a close region image that comprises a nearby object located in the vicinity of a cameraman from color moving images, comprising the steps of: using the capture means to take color moving images of the nearby object; repeatedly turning an infrared light source that irradiates the nearby object with infrared light alternately ON and OFF, in sync with the timing with which the capture means acquire field images; using the infrared image acquiring means to alternately acquire a lit infrared image which is an infrared image of the nearby object when the infrared light source is lit, and an unlit infrared image which is an infrared image of the nearby object when the infrared light source is unlit, in sync with the timing with which the capture means acquire field images; acquiring, when the infrared image which corresponds to the current field image is a lit infrared image and the infrared image which corresponds to the previous field is an unlit infrared image, an absolute value image for the difference between the lit infrared image and the unlit infrared image which are in chronological succession, by rendering an image, which is obtained by multiplying the difference of the lit infrared image from the unlit infrared image by minus 1, an absolute value differential image; and extracting the close region image from the color moving image acquired by the capture means on the basis of this absolute value differential image.

According to this constitution, color moving images are taken by the capture means, the infrared light source is repeatedly turned alternately ON and OFF in sync with the timing with which the capture means acquire field images, and lit infrared images and unlit infrared images are alternately taken repeatedly by the infrared image acquiring means. Further, an absolute value image for the difference between chronologically successive lit infrared images and unlit infrared images (an absolute value differential image) is acquired. Here, in a case where the infrared image which corresponds to the previous field image is a lit infrared image and the infrared image which corresponds to the current field image is an unlit infrared image, the absolute value differential image is acquired by subtracting the unlit infrared image from the lit infrared image, and, in a case where the infrared image which corresponds to the previous field image is an unlit infrared image and the infrared image which corresponds to the current field image is a lit infrared image, the absolute value differential image is acquired by multiplying, by minus 1, the differential image produced by subtracting the lit infrared image from the unlit infrared image.

It is thus possible to obtain a differential image for the lit infrared image and the unlit infrared image at the field rate. Further, the close region image is extracted on the basis of this differential image and the corresponding color moving image is then subjected to masking processing with the close region image serving as a mask image, whereby the close region image is extracted from the color moving image.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A close region image extraction device for extracting a close region image that comprises a nearby object located in the vicinity of a cameraman from color moving images, comprising:
capture means for acquiring color moving images of the nearby object by using visible light;
an infrared light source for irradiating the nearby object with infrared light;
lighting control means that repeatedly turns the infrared light source alternately ON and OFF, in sync with the timing with which the capture means acquire field images;
infrared image acquiring means that alternately acquires a lit infrared image which is an infrared image of the nearby object when the infrared light source is lit, and an unlit infrared image which is an infrared image of the nearby object when the infrared light source is unlit, in sync with the timing with which the capture means acquire field images;
absolute value differential image acquiring means, which acquires an absolute value image for the difference between the lit infrared image and the unlit infrared image acquired in chronological succession, and wherein said absolute image is obtained by multiplying the subtracted values of the lit infrared image from that of the unlit infrared image by minus 1 when the infrared image which corresponds to the current field image is a lit infrared image and the infrared image which corresponds to the previous field is an unlit infrared image; and
extracting means for extracting the close region image from the color moving images on the basis of the absolute value differential image acquired by the absolute value differential image acquiring means.

2. The close region image extraction device according to claim 1, wherein the optical axes of the capture means and the infrared image acquiring means are provided so as to coincide with each other.

3. The close region image extraction device according to claim 1 or 2, further comprising:
an image synthesizer, which synthesizes two chronologically successive field images that are acquired by the capture means, and a lit infrared image and an unlit infrared image acquired in sync with these two field images, respectively, to form a single image, and outputs this image to the absolute value differential image acquiring means,
wherein the image synthesizer synthesizes the two field images, the lit infrared image and the unlit infrared image by reducing same such that the number of pixels thereof in the horizontal direction is halved, respectively, so as to form a single image.

4. The close region image extraction device according to any of claims 1 to 3, wherein the extracting means extract an object image that represents the nearby object by eliminating skin-colored regions from the close region image.

5. The close region image extraction device according to any of claims 1 to 4, further comprising:
an head-mounted display for displaying an object image extracted by the extracting means,
wherein the capture means, the infrared light source and the infrared image acquiring means are integrated with the head-mounted display and are provided so that the respective optical axes thereof lie within the field of view of the cameraman.

6. A close region image extraction device for extracting a close region image including a nearby object located in the vicinity of a cameraman from color moving images, said close region image extraction device comprising:
a first mounting unit (10), including:
capture means (11) for acquiring color moving images of the nearby object by using visible light;
a pair of infrared light sources (15) for irradiating the nearby object with infrared light;
lighting control means that repeatedly turns the infrared light source alternately ON and OFF, in sync with the timing with which the capture means acquire field images;
infrared image acquiring means (12) that alternately acquires a lit infrared image which is an infrared image of the nearby object when the infrared light source is lit, and an unlit infrared image which is an infrared image of the nearby object when the infrared light source is unlit, in sync with the timing with which the capture means acquire field images;
a beam splitter (13) provided between the infrared light source pair in a vertical direction for splitting a reflected light from the nearby object to the capture means and the infrared image acquiring means;
a second mounting unit (20) including:
absolute value differential image acquiring means (22) , which acquires an absolute value image for the difference between the lit infrared image and the unlit infrared image acquired in chronological succession, and wherein said absolute image is obtained by multiplying the subtracted values of the lit infrared image from that of the unlit infrared image by minus 1 when the infrared image which corresponds to the current field image is a lit infrared image and the infrared image which corresponds to the previous field is an unlit infrared image; and
extracting means (23) for extracting the close region image from the color moving images on the basis of the absolute value differential image acquired by the absolute value differential image acquiring means.

7. The close region image extracting device according to claim 6, wherein said first mounting unit (10) further comprising a display unit (103) for displaying moving images photographed by the capture means (11) and said display unit (103) is mountable around a head of a user.

8. The close region image extracting device according to claim 7, wherein said first mounting unit is so configured that it is mountable around the head of the user and said second mounting unit is so configured that it is mountable around a waist portion of the user.

9. The close region image extracting device according to claim 8, wherein the first mounting unit is so configured that the beam splitter (13) can be placed around a temple of the user.

10. A close region image extraction method for extracting a close region image that comprises a nearby object located in the vicinity of a cameraman from color moving images, comprising the steps of:
using the capture means to take color moving images of the nearby object;
repeatedly turning an infrared light source that irradiates the nearby object with infrared light alternately ON and OFF, in sync with the timing with which the capture means acquire field images;
using the infrared image acquiring means to alternately acquire a lit infrared image which is an infrared image of the nearby object when the infrared light source is lit, and an unlit infrared image which is an infrared image of the nearby object when the infrared light source is unlit, in sync with the timing with which the capture means acquire field images;
acquiring, when the infrared image which corresponds to the current field image is a lit infrared image and the infrared image which corresponds to the previous field is an unlit infrared image, an absolute value image for the difference between the lit infrared image and the unlit infrared image which are in chronological succession, by rendering an image, which is obtained by multiplying the difference of the lit infrared image from the unlit infrared image by minus 1, an absolute value differential image; and
extracting the close region image from the color moving images acquired by the capture means on the basis of this absolute value differential image.
